# EUROPEAN PATENT SPECIFICATION

(11) **EP 3 804 265 B1**
(45) Date of publication and mention of the grant of the patent: **25.06.2025**
(21) Application number: 19729116.4
(22) Date of filing: 15.05.2019
(51) Int. Cl.: H04L 9/40, H04W 12/06, H04W 12/30, H04W 12/50, H04W 60/00, H04W 84/12

(54) **END USER INCLUSION AND ACCESS OF DEVICES**
ENDBENUTZEREINBINDUNG UND -ZUGRIFF VON VORRICHTUNGEN
INCLUSION D'UTILISATEUR FINAL ET ACCÈS DE DISPOSITIFS

(30) Priority: 28.05.2018 IN 201811019936
(43) Date of publication of application: 14.04.2021
(73) Proprietor: Carrier Corporation, Palm Beach Gardens, FL 33418 (US)
(72) Inventor: NALLAPERUMAL, Pirammanayagam, Telangana, Hyderabad 500081 (IN); MANGAIAHGARI, Phani Pavan Kumar, Telangana, Hyderabad 500081 (IN); GAJULA, Saikrishna, Telangana, Hyderabad 500081 (IN); GOVINDAVARAM, Srikanth, Telangana, Hyderabad 500081 (IN)
(74) Representative: Dehns
(86) International application number: PCT/US2019/032394
(87) International publication number: WO 2019/231678

(56) References cited:
- EP-A1- 1 615 380
- US-A1- 2017 142 086
- ANONYMOUS: "SpeedTouch(TM) 545/570 Multi-User ADSL Gateways - Setup and User's Guide Release R4.2.1", 14 August 2003 (2003-08-14), pages 1 - 98, XP093131785, Retrieved from the Internet <URL:http://www.speedguide.net/images/hardware/technicolorthomson/speedtouch570_ug.pdf> [retrieved on 20240215]

## Description

### BACKGROUND

The present invention pertains to the art of security systems and more specifically to end user inclusion and access of devices.

Wi-Fi provisioning is the process of adding a wireless device to a network such as a home network or a business network. This process, typically, involves entering credential information (usernames, passwords, etc.) in to the wireless device and connecting to the network from the wireless device. Once connected to the network, any changes in the credentialing information for the network typically needs to be separately updated in the wireless device(s) connecting to the network.

EP 1615380 A1 discloses a wireless local area network (WLAN) comprising a modem that forms an access point to the WLAN, the modem comprising an association device which is configured to enable association of a new client to the WLAN.

US 2017/142086 A1 discloses a system and machine-implemented method for wireless network access for a wireless-enabled device.

Document "SpeedTouch™ 545/570 Multi-User ADSL Gateways - Setup and User's Guide Release R4.2.1", 14 August 2003, XP093131785 is a manual of the gateway referred to in document EP 1615380 A1.

### BRIEF DESCRIPTION

According to an aspect there is provided a system comprising: a gateway device comprising a processor and a transceiver, the gateway device configured to operate a virtual local area network (VLAN) having a first network partition and a second network partition and the gateway device further configured to selectively operate the VLAN in one of a plurality of modes, wherein the plurality of modes includes: an operational mode and a provisioning mode, wherein the gateway device is configured to, while in the provisioning mode: activate the second network partition; receive, from the wireless device, credential data; establish a connection to the wireless device through the second network partition based at least in part on the credential data; and transmit secured credentialing data associated with the first network partition to the wireless device; wherein the credential data is preprogrammed in to the wireless device; wherein the gateway device operates in provisioning mode responsive to an input from a user; and wherein the input of the user comprises pressing a Wi-Fi Protected Setup, WPS, button and entering a login to ensure that the user activating the WPS is authorized.

The second network partition may be activated for a period of time.

The gateway device may be configured to: responsive to transmitting the secured credentialing data of the first network partition to the wireless device, operate the VLAN in operational mode; and connect to the wireless device through the first network partition.

The gateway device may receive credential data through the second network partition from the wireless device responsive to an input from a user.

The gateway device may comprise a home security system panel.

According to another aspect there is provided a method for credential provisioning, the method comprising: receiving, by a gateway device, a request for provisioning for a wireless device, wherein the gateway device operates a virtual local area network (VLAN), the VLAN comprising a first network partition and a second network partition; responsive to the request, activating the second network partition; receiving, through the second network partition, the credentialing data associated with the wireless device; establishing a connection to the wireless device through the second network partition based at least in part on the credential data; and transmitting secured credentialing data associated with the first network partition to the wireless device; the credential data is preprogrammed in to the wireless device; wherein the request for provisioning is an input from a user; and wherein the input of the user comprises pressing a Wi-Fi Protected Setup, WPS, button and entering a login to ensure that the user activating the WPS is authorized.

The second network partition may be activated for a period of time.

The method may further include: responsive to transmitting the secured credentialing data to the wireless device, connecting to the wireless device through the first network partition.

The gateway device may comprise a home security system panel.

The method may further include: transmitting a reset command to the wireless device.

### BRIEF DESCRIPTION OF THE DRAWINGS

The following descriptions should not be considered limiting in any way. With reference to the accompanying drawings, like elements are numbered alike:
FIG. 1 depicts a block diagram of a computer system;
FIG. 2 depicts a system for credentialing a wireless device;
FIG. 3 depicts a system for credentialing a wireless device; and
FIG. 4 depicts a flow diagram of a method for credential provisioning.

The diagrams depicted herein are illustrative. There can be many variations to the diagram or the operations described therein without departing from the scope of the present invention as defined by the claims. For instance, the actions can be performed in a differing order or actions can be added, deleted or modified. Also, the term "coupled" and variations thereof describes having a communications path between two elements and does not imply a direct connection between the elements with no intervening elements/connections between them. All of these variations are considered a part of the specification.

### DETAILED DESCRIPTION

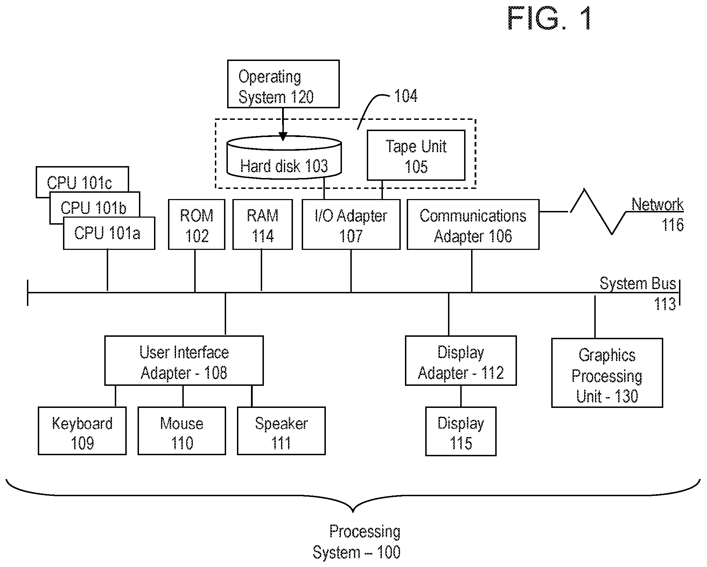

Referring to FIG. 1, there is shown a processing system 100 for implementing the teachings herein. The system 100 has one or more central processing units (processors) 101a, 101b, 101c, etc. (collectively or generically referred to as processor(s) 101). Each processor 101 may include a reduced instruction set computer (RISC) microprocessor. Processors 101 are coupled to system memory 114 and various other components via a system bus 113. Read only memory (ROM) 102 is coupled to the system bus 113 and may include a basic input/output system (BIOS), which controls certain basic functions of system 100.

FIG. 1 further depicts an input/output (I/O) adapter 107 and a network adapter 106 coupled to the system bus 113. I/O adapter 107 may be a small computer system interface (SCSI) adapter that communicates with a hard disk 103 and/or tape storage drive 105 or any other similar component. I/O adapter 107, hard disk 103, and tape storage device 105 are collectively referred to herein as mass storage 104. Operating system 120 for execution on the processing system 100 may be stored in mass storage 104. A network adapter 106 interconnects bus 113 with an outside network 116 enabling data processing system 100 to communicate with other such systems. A screen (e.g., a display monitor) 115 is connected to system bus 113 by display adaptor 112, which may include a graphics adapter to improve the performance of graphics intensive applications and a video controller. Adapters 107, 106, and 112 may be connected to one or more I/O busses that are connected to system bus 113 via an intermediate bus bridge (not shown). Suitable I/O buses for connecting peripheral devices such as hard disk controllers, network adapters, and graphics adapters typically include common protocols, such as the Peripheral Component Interconnect (PCI). Additional input/output devices are shown as connected to system bus 113 via user interface adapter 108 and display adapter 112. A keyboard 109, mouse 110, and speaker 111 all interconnected to bus 113 via user interface adapter 108, which may include, for example, a Super I/O chip integrating multiple device adapters into a single integrated circuit.

The processing system 100 may include a graphics processing unit 130. Graphics processing unit 130 is a specialized electronic circuit designed to manipulate and alter memory to accelerate the creation of images in a frame buffer intended for output to a display. In general, graphics processing unit 130 is very efficient at manipulating computer graphics and image processing, and has a highly parallel structure that makes it more effective than general-purpose CPUs for algorithms where processing of large blocks of data is done in parallel.

Thus, as configured in FIG. 1, the system 100 includes processing capability in the form of processors 101, storage capability including system memory 114 and mass storage 104, input means such as keyboard 109 and mouse 110, and output capability including speaker 111 and display 115. A portion of system memory 114 and mass storage 104 may collectively store an operating system to coordinate the functions of the various components shown in FIG. 1.

Turning now to an overview of technologies that are more specifically relevant to aspects of the invention, most security systems, fire detection systems, and home control system rely on multiple sensors setup within a home or business location. For example, a home security system may require an outdoor camera set up at or near an entry point for the home. Most sensors (e.g., cameras, light sensors, etc.) are wireless and include an addressable interface that can connect to a network. These sensors can sometimes be referred to as internet of things (IoT) devices. In most cases, connecting an IoT device to a wireless network involves the manual input of a passcode or a network name or a service set identifier (SSID). Also, this sometimes will need to be performed while the system (security, fire, etc.) is in a discovery mode. Home security systems, typically, include a security panel set up in the home which may allow for entry of information into the panel. However, the IoT devices such as cameras do not include input/output devices. Also, the IoT device may not be manufactured by the same company as the home security system (panel) manufacturer. A customer may wish to utilize certain types of sensors and pair them with the home security system.

The term Internet of Things (IoT) object is used herein to refer to any object (e.g., an appliance, a sensor, etc.) that has an addressable interface (e.g., an Internet protocol (IP) address, a Bluetooth identifier (ID), a near-field communication (NFC) ID, etc.) and can transmit information to one or more other objects over a wired or wireless connection. An IoT object may have a passive communication interface, such as a quick response (QR) code, a radio-frequency identification (RFID) tag, an NFC tag, or the like, or an active communication interface, such as a modem, a transceiver, a transmitter-receiver, or the like. An IoT object can have a particular set of attributes (e.g., a device state or status, such as whether the IoT object is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT objects may include, but are not limited to, refrigerators, toasters, ovens, microwaves, freezers, dishwashers, dishes, hand tools, clothes washers, clothes dryers, furnaces, heating, ventilation, air conditioning & refrigeration (HVACR) systems, air conditioners, thermostats, fire alarm & protection system, fire, smoke & CO detectors, access / video security system, elevator and escalator systems, burner and boiler controls, building management controls, televisions, light fixtures, vacuum cleaners, sprinklers, electricity meters, gas meters, etc., so long as the devices are equipped with an addressable communications interface for communicating with the IoT network. IoT objects may also include cell phones, desktop computers, laptop computers, tablet computers, personal digital assistants (PDAs), etc. Accordingly, the IoT network can include a combination of "legacy" Internet-accessible devices (e.g., laptop or desktop computers, cell phones, etc.) in addition to devices that do not typically have Internet-connectivity (e.g., dishwashers, etc.).

Turning now to an overview of the aspects of the present invention, the above-described shortcomings of the prior art are addressed by providing a system for provisioning of credential information to IoT devices seamlessly. The system can isolate wireless network partitions and utilize the partitions for different functions. This can be achieved by utilizing a virtual local area network (VLAN). A VLAN is any broadcast domain that is partitioned and isolated in a computer network at the data link layer. In this sense, the VLAN can partition a wireless network operating in a home or business location. The partition can include any number of network partitions. For example, a first network partition can be utilized for IoT devices that have been authenticated and have inputted credential data for connecting to the first network partition. A second network partition can be utilized for provisioning for IoT devices.

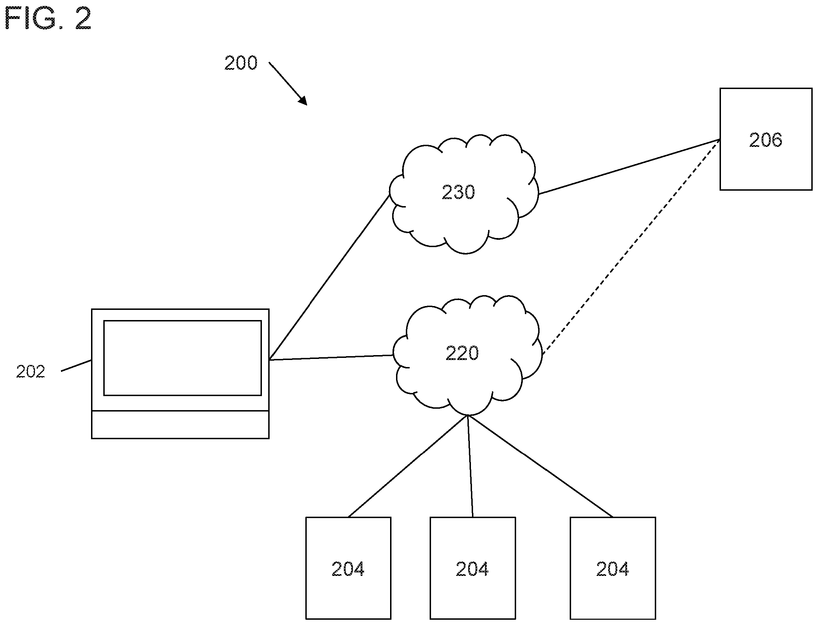

Turning now to a more detailed description of aspects of the present invention, FIG. 2 depicts a system for credentialing a wireless device. The system 200 includes a gateway device 202, connected IoT devices 204, a new IoT device 206, and two network partitions (secured network partition 220 and the provisioning network partition 230). The gateway device 202 can be a home security panel installed at a customer's home.

The gateway device 202 can be implemented on the processing system 100 found in FIG. 1. Additionally, a cloud computing system can be in wired or wireless electronic communication with one or all of the elements of the system 200. Cloud can supplement, support or replace some or all of the functionality of the elements of the system 200. Additionally, some or all of the functionality of the elements of system 200 can be implemented as a node of a cloud. The cloud computing described herein is only one example of a suitable cloud computing environment.

The gateway device 202 controls a virtual local area network (VLAN) that includes the secured network partition 220 and the provisioning network partition 230. The gateway device 202 can control the VLAN through an intermediate device such as a modem or the like. The system 200 can be, for example, a home security system that has sensors and cameras (IoT devices) wirelessly set up through a home or building. The connected IoT devices 204 are connected to the secured network partition 220 as these devices have been authenticated and have entered a correct SSID or passcode to the connect to the secured network partition 220. When a new IoT device 206 needs to be connected, the gateway device 202 can be operated to provide access to the new IoT device 206. For the new IoT device 206, the gateway device 202 can initiate a provisioning mode of operation. While in the provisioning mode, the gateway device 202 activates the provisioning network partition 230. The provisioning mode is activated by a user inputting a login to the gateway device 202 after pressing a Wi-Fi Protected Setup, WPS, button on the gateway device 202. The provisioning mode can be activated for a set period of time either automatically or by the user based on number of new devices being connected and the like. The new IoT device 206 can have the credentials for the provisioning network partition 230 preprogrammed in the new IoT device 206. For example, the manufacturer of an IoT device can preprogram specific provisioning credentials in the IoT device for use with a specific type of home security system. The home security system can use the same credentialing information for each provisioning network partition 230 across all system lines.

While in provisioning mode, the new IoT device 206 can connect to the gateway device 202 through the provisioning network partition 230 utilizing the preprogrammed credential information (e.g., SSID and password). The new IoT device 206 can search for credential information from the gateway device 202 upon powering on the IOT device 206 or pressing a button on the IoT device 206 after powering on. Once connected, the gateway device 202 can authenticate the new IoT device 206 through a secure API exchange or the like. Once authenticated, the gateway device 202 can transmit credential information (SSID and password, etc.) for the secured network partition 220 to the new IoT device 206. This credential information is transmitted through the provisioning network partition 230. Once this credential information is received by the new IoT device 206, the device can then connect to the secured network partition 220 and thus operate with the system 200.

The new IoT device 206 can connect to the provisioning network partition 230 when a user activates the IoT device 206. For example, a user could press a button on the new IoT device 206 which would cause the IoT device 206 to automatically search for a programmed SSID (for the partition 230) and join it automatically. Alternatively, the new IoT device 206 can connect to the provisioning network partition 230 when it is turned on for the first time.

The system 200 enters into provisioning mode based on a user pressing a Wi-Fi Protected Setup (WPS) button on the gateway device 202. After pressing the WPS button, the provisioning network partition 230 is broadcasted for a period of time. A WPS button on the new IoT device 206 can be pressed as well to allow for the new IoT device 206 to search for the pre-programmed SSID and connect through the provisioning network partition 230. After pressing the WPS button, the gateway device 202 requires a login and password or some code to be entered to ensure that the user activating the WPS is authorized.

The gateway device 202 can be a panel for a home security system or a home controlling system. For example, the panel can be used to operate IoT devices such as electronic locks, indoor and outdoor lighting, appliances, and the like. Each of the IoT devices can connect to the wireless network through the systems and methodology described herein.

The new IoT device 206 can be, for example, a wireless camera for a home security system. During provisioning, to get the camera to search for the pre-programmed SSID, a user can hold up an image for the camera and utilizing image recognition for the image, the camera would search the required SSID and connect to the provisioning network partition 230. The image could be an image on a smart phone or tablet or a printed out image that can be included with the IoT device 206.

If the credential information for the secured network partition changes, the gateway device 202 can pass along the updated information to the connected IoT device 204 before the credential information (e.g., password to the Wi-Fi) is changed. This can be performed through the first partition 220 before credential information is changed and applied to the first partition 220. In one example, when changing the credential information of the first network partition 220, the user will be notified of any offline devices.

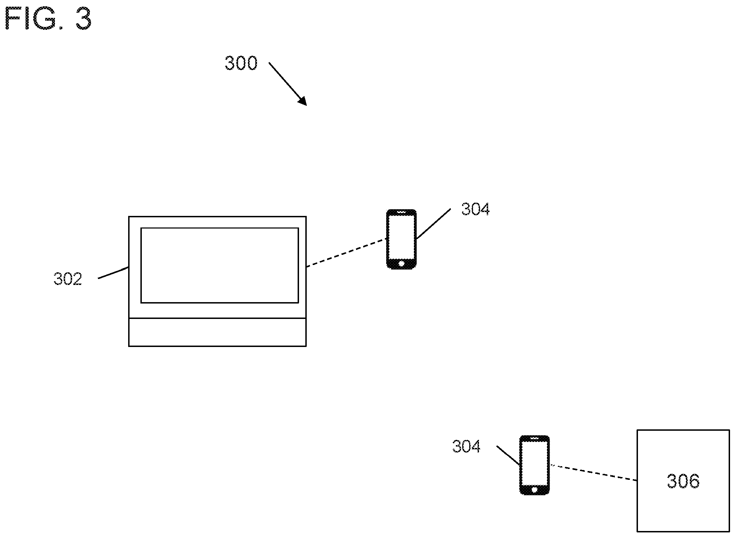

FIG. 3 depicts a system for credentialing a wireless device. The system 300 includes a control panel 302, a user device 304, and an IoT device 306. The control panel 302 can be a security panel for a home security system and can operate multiple IoT devices such as sensors and cameras connected through a network. The user device 304 can be any type of device such as, for example, a smart phone, a tablet, a smart watch, and the like. The system 300 can provide credential information for the IoT device 306 utilizing the user device 304. The user device 304 can connect to the control panel 302 using near field communication (NFC). The user device 304 access the control panel 302 by utilizing a login or some other authentication process. Once accessed, the control panel 302 can transmit to the user device 304 credential data and any other data for the new IoT device 306 to access the network. The other data can include authentication data or identifier data so that the control panel 302 can discover the new IoT device 306 on the network once connected. The user device 304, after receiving the credential data and other data, can connect to the IoT device 306 using a NFC connection. Once connected and authenticated, the user device 304 can transmit the credential data and the other data to the IoT device 306 allowing for the IoT device 306 to connect to the network.

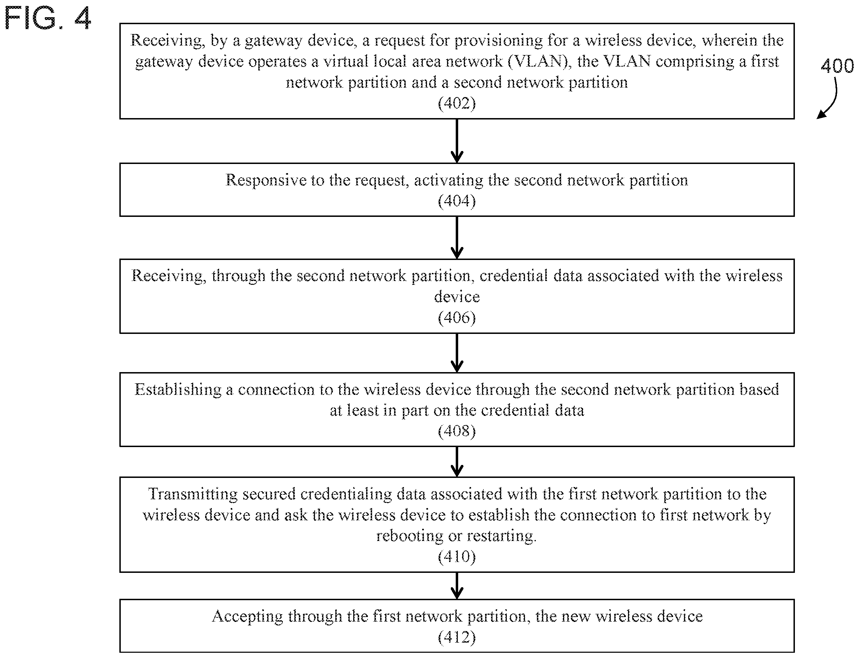

FIG. 4 depicts a flow diagram of a method for credential provisioning. The method 400 includes receiving, by a gateway device, a request for provisioning for a wireless device, wherein the gateway device operates a virtual local area network (VLAN), the VLAN comprising a first network partition and a second network partition, as shown in block 402. At block 404, the method 400 includes responsive to the request, activating the second network partition. The method 400, at block 406, includes receiving, through the second network partition, credential data associated with the wireless device. At block 408, the method 400 includes establishing a connection to the wireless device through the second network partition based at least in part on the credential data. The method 400, at block 410, includes transmitting secured credentialing data associated with the first network partition to the wireless device and ask the wireless device to establish the connection to first network by rebooting or restarting. And at block 412, the method 400 includes accepting through the first network partition, the new wireless device.

Additional processes may also be included. It should be understood that the processes depicted in FIG. 4 represent illustrations and that other processes may be added or existing processes may be removed, modified, or rearranged without departing from the scope of the present invention as defined by the appended claims.

A detailed description of the present invention is presented herein by way of exemplification and not limitation with reference to the Figures.

The term "about" is intended to include the degree of error associated with measurement of the particular quantity based upon the equipment available at the time of filing the application.

The terminology used herein is for the purpose of describing particular examples only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to particular examples, it will be understood by those skilled in the art that various changes may be made without departing from the scope of the present invention as defined by the appended claims. Therefore, it is intended that the present invention not be limited to the particular example disclosed as the best mode contemplated for carrying out this present invention, but that the scope of the present invention is defined by the appended claims.

## Claims

1. A system (200) comprising:
a gateway device (202) comprising a processor and a transceiver, the gateway device configured to operate a virtual local area network (VLAN) having a first network partition (220) and a second network partition (230); and
the gateway device further configured to selectively operate the VLAN in one of a plurality of modes, wherein the plurality of modes includes:
an operational mode; and
a provisioning mode, wherein the gateway device is configured to, while in the provisioning mode:
activate the second network partition;
receive, from a wireless device (206), credential data;
establish a connection to the wireless device through the second network partition based at least in part on the credential data; and
transmit secured credentialing data associated with the first network partition to the wireless device;
wherein the credential data is preprogrammed in to the wireless device;
wherein the gateway device (202) operates in provisioning mode responsive to an input from a user; and
wherein the input of the user comprises pressing a Wi-Fi Protected Setup, WPS, button; and
**characterised in that** the input of the user further comprises, after pressing the WPS button, entering a login to ensure that the user activating the WPS is authorized.

2. The system of Claim 1, wherein the second network partition (230) is activated for a period of time.

3. The system of Claim 1, wherein the gateway device (202) is configured to:
responsive to transmitting the secured credentialing data of the first network partition (220) to the wireless device (206), operate the VLAN in operational mode; and
connect to the wireless device through the first network partition.

4. The system of Claim 1, wherein the gateway device (202) receives credential data through the second network partition (230) from the wireless device (206) responsive to an input from a user.

5. The system of Claim 1, wherein the gateway device (202) comprises a home security system panel.

6. A method (400) for credential provisioning, the method comprising:
receiving (402), by a gateway device (202), a request for provisioning for a wireless device (206), wherein the gateway device operates a virtual local area network (VLAN), the VLAN comprising a first network partition (220) and a second network partition (230);
responsive to the request, activating (404) the second network partition;
receiving (406), through the second network partition, credential data associated with the wireless device;
establishing (408) a connection to the wireless device through the second network partition based at least in part on the credential data; and
transmitting (410) secured credentialing data associated with the first network partition to the wireless device;
wherein the credential data is preprogrammed in to the wireless device;
wherein the request for provisioning is an input from a user; and
wherein the input of the user comprises pressing a Wi-Fi Protected Setup, WPS, button; and
**characterised in that** the input of the user further comprises, after pressing the WPS button, entering a login to ensure that the user activating the WPS is authorized.

7. The method of Claim 6, wherein the second network partition (230) is activated for a period of time.

8. The method of Claim 6, further comprising: responsive to transmitting the secured credentialing data to the wireless device (206), connecting (412) to the wireless device through the first network partition (220).

9. The method of Claim 6, wherein the gateway device (202) comprises a home security system panel.

10. The method of Claim 6, further comprising transmitting a reset command to the wireless device (206).

## Patentansprüche

1. System (200), umfassend:
eine Gateway-Vorrichtung (202), die einen Prozessor und einen Transceiver umfasst, wobei die Gateway-Vorrichtung so konfiguriert ist, dass sie ein virtuelles lokales Netzwerk (VLAN) mit einer ersten Netzwerkpartition (220) und einer zweiten Netzwerkpartition (230) betreibt; und
die Gateway-Vorrichtung, die ferner so konfiguriert ist, dass sie das VLAN selektiv in einem von einer Vielzahl von Modi betreibt, wobei die Vielzahl von Modi beinhaltet:
einen Betriebsmodus; und
einen Bereitstellungsmodus, wobei die Gateway-Vorrichtung so konfiguriert ist, dass sie, während sie sich im Bereitstellungsmodus befindet:
die zweite Netzwerkpartition aktiviert;
Anmeldedaten von einer drahtlosen Vorrichtung (206) empfängt;
eine Verbindung zur drahtlosen Vorrichtung über die zweite Netzwerkpartition zumindest teilweise auf Grundlage der Anmeldedaten herstellt; und
gesicherte Anmeldedaten, die mit der ersten Netzwerkpartition verbunden sind, an die drahtlose Vorrichtung übertragt;
wobei die Anmeldedaten in der drahtlosen Vorrichtung vorprogrammiert sind;
wobei die Gateway-Vorrichtung (202) im Bereitstellungsmodus als Reaktion auf eine Eingabe von einem Benutzer arbeitet; und
wobei die Eingabe des Benutzers das Drücken einer WPS(Wi-Fi Protected Setup)-Taste umfasst; und
**dadurch gekennzeichnet, dass** die Eingabe des Benutzers nach dem Drücken der WPS-Taste ferner die Eingabe eines Logins umfasst, um sicherzustellen, dass der Benutzer, der die WPS aktiviert, dazu berechtigt ist.

2. System nach Anspruch 1, wobei die zweite Netzwerkpartition (230) für einen bestimmten Zeitraum aktiviert ist.

3. System nach Anspruch 1, wobei die Gateway-Vorrichtung (202) so konfiguriert ist, dass sie:
als Reaktion auf die Übertragung der gesicherten Anmeldedaten der ersten Netzwerkpartition (220) an die drahtlose Vorrichtung (206) das VLAN im Betriebsmodus betreiben; und
eine Verbindung mit der drahtlosen Vorrichtung über die erste Netzwerkpartition herstellt.

4. System nach Anspruch 1, wobei die Gateway-Vorrichtung (202) Anmeldedaten über die zweite Netzwerkpartition (230) von der drahtlosen Vorrichtung (206) als Reaktion auf eine Eingabe von einem Benutzer empfängt.

5. System nach Anspruch 1, wobei die Gateway-Vorrichtung (202) ein Haussicherheits-System-Panel umfasst.

6. Verfahren (400) zur Bereitstellung von Anmeldedaten, wobei das Verfahren Folgendes umfasst:
Empfangen (402) einer Anforderung zur Bereitstellung für eine drahtlose Vorrichtung (206) durch eine Gateway-Vorrichtung (202), wobei die Gateway-Vorrichtung ein virtuelles lokales Netzwerk (VLAN) betreibt, wobei das VLAN eine erste Netzwerkpartition (220) und eine zweite Netzwerkpartition (230) umfasst;
Aktivierung (404) der zweiten Netzwerkpartition als Reaktion auf die Anforderung;
Empfangen (406) von Anmeldedaten, die der drahtlosen Vorrichtung zugeordnet sind, über die zweite Netzwerkpartition;
Herstellen (408) einer Verbindung zur drahtlosen Vorrichtung über die zweite Netzwerkpartition zumindest teilweise auf Grundlage der Anmeldedaten; und
Übertragen (410) gesicherter Anmeldedaten, die mit der ersten Netzwerkpartition verbunden sind, an die drahtlose Vorrichtung;
wobei die Anmeldedaten in der drahtlosen Vorrichtung vorprogrammiert sind;
wobei die Anforderung zur Bereitstellung eine Eingabe von einem Benutzer ist; und
wobei die Eingabe des Benutzers das Drücken einer WPS(Wi-Fi Protected Setup)-Taste umfasst; und
**dadurch gekennzeichnet, dass** die Eingabe des Benutzers nach dem Drücken der WPS-Taste ferner die Eingabe eines Logins umfasst, um sicherzustellen, dass der Benutzer, der die WPS aktiviert, dazu berechtigt ist.

7. Verfahren nach Anspruch 6, wobei die zweite Netzwerkpartition (230) für einen bestimmten Zeitraum aktiviert ist.

8. Verfahren nach Anspruch 6, ferner umfassend: Verbinden (412) mit der drahtlosen Vorrichtung über die erste Netzwerkpartition (220) als Reaktion auf die Übertragung der gesicherten Anmeldedaten an die drahtlose Vorrichtung (206).

9. Verfahren nach Anspruch 6, wobei die Gateway-Vorrichtung (202) ein Haussicherheits-System-Panel umfasst.

10. Verfahren nach Anspruch 6, ferner umfassend das Übertragen eines Rücksetzbefehls an die drahtlose Vorrichtung (206).

## Revendications

1. Système (200) comprenant :
un dispositif de passerelle (202) comprenant un processeur et un émetteur-récepteur, le dispositif de passerelle étant configuré pour exploiter un réseau local virtuel (VLAN) présentant une première partition réseau (220) et une seconde partition réseau (230) ; et
le dispositif de passerelle étant également configuré pour exploiter de manière sélective le VLAN dans l'un d'une pluralité de modes, dans lequel la pluralité de modes comporte :
un mode d'exploitation ; et
un mode d'approvisionnement, dans lequel le dispositif de passerelle est configuré pour, en mode d'approvisionnement :
activer la seconde partition réseau ;
recevoir, en provenance d'un dispositif sans fil (206), des données d'identification ;
établir une connexion au dispositif sans fil par l'intermédiaire de la seconde partition réseau sur la base au moins en partie des données d'identification ; et
transmettre des données d'identification sécurisées associées à la première partition réseau au dispositif sans fil ;
dans lequel les données d'identification sont préprogrammées dans le dispositif sans fil ;
dans lequel le dispositif de passerelle (202) fonctionne en mode de provisionnement en réponse à une saisie provenant d'un utilisateur ; et
dans lequel la saisie de l'utilisateur comprend l'appui sur un bouton Configuration Wi-Fi protégée, WPS ; et
**caractérisé en ce que** la saisie de l'utilisateur comprend également, après l'appui sur le bouton WPS, la saisie d'un identifiant pour garantir que l'utilisateur activant le WPS est autorisé.

2. Système selon la revendication 1, dans lequel la seconde partition réseau (230) est activée pendant une période de temps.

3. Système selon la revendication 1, dans lequel le dispositif de passerelle (202) est configuré pour :
en réponse à la transmission des données d'identification sécurisées de la première partition réseau (220) au dispositif sans fil (206), exploiter le VLAN en mode d'exploitation ; et
se connecter au dispositif sans fil par l'intermédiaire de la première partition réseau.

4. Système selon la revendication 1, dans lequel le dispositif de passerelle (202) reçoit des données d'identification par l'intermédiaire de la seconde partition réseau (230) provenant du dispositif sans fil (206) en réponse à une saisie provenant d'un utilisateur.

5. Système selon la revendication 1, dans lequel le dispositif de passerelle (202) comprend un panneau de système de sécurité domestique.

6. Procédé (400) de fourniture d'informations d'identification, le procédé comprenant :
la réception (402), par un dispositif de passerelle (202), d'une requête d'approvisionnement pour un dispositif sans fil (206), dans lequel le dispositif de passerelle exploite un réseau local virtuel (VLAN), le VLAN comprenant une première partition réseau (220) et une seconde partition réseau (230) ;
en réponse à la requête, l'activation (404) de la seconde partition réseau ;
la réception (406), par l'intermédiaire de la seconde partition réseau, de données d'identification associées au dispositif sans fil ;
l'établissement (408) d'une connexion au dispositif sans fil par l'intermédiaire de la seconde partition réseau sur la base au moins en partie des données d'identification ; et
la transmission (410) de données d'identification sécurisées associées à la première partition réseau au dispositif sans fil ;
dans lequel les données d'identification sont préprogrammées dans le dispositif sans fil ;
dans lequel la requête de provisionnement est une saison provenant d'un utilisateur ; et
dans lequel la saisie de l'utilisateur comprend l'appui sur un bouton Configuration Wi-Fi protégée, WPS ; et
**caractérisé en ce que** la saisie de l'utilisateur comprend également, après l'appui sur le bouton WPS, la saisie d'un identifiant pour garantir que l'utilisateur activant le WPS est autorisé.

7. Procédé selon la revendication 6, dans lequel la seconde partition réseau (230) est activée pendant une période de temps.

8. Procédé selon la revendication 6, comprenant également : en réponse à la transmission des données d'identification sécurisées au dispositif sans fil (206), la connexion (412) au dispositif sans fil par l'intermédiaire de la première partition réseau (220).

9. Procédé selon la revendication 6, dans lequel le dispositif de passerelle (202) comprend un panneau de système de sécurité domestique.

10. Procédé selon la revendication 6, comprenant également la transmission d'une commande de réinitialisation au dispositif sans fil (206).
